(19) Europäisches Patentamt
European Patent Office
Office européen des brevets

(11) **EP 2 157 720 A1**

(12) **EUROPEAN PATENT APPLICATION**
published in accordance with Art. 153(4) EPC

(43) Date of publication:
**24.02.2010 Bulletin 2010/08**

(51) Int Cl.:
**H04J 13/00** (2006.01)

(21) Application number: **07720994.8**

(22) Date of filing: **27.04.2007**

(86) International application number:
**PCT/CN2007/001421**

(87) International publication number:
**WO 2008/122152 (16.10.2008 Gazette 2008/42)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **09.04.2007 CN 200710090836**

(71) Applicant: **Masshall Limited**
**Romasco Place**
**Wickhams Cay 1**
**P.O. Box 3140**
**Road Town, Tortola (VG)**

(72) Inventors:
• **LI, Chao**
  **Beijing 100085 (CN)**
• **GAO, Kangqiang**
  **Beijing 100085 (CN)**
• **XU, Chaolun**
  **Beijing 100085 (CN)**

(74) Representative: **HOFFMANN EITLE**
**Patent- und Rechtsanwälte**
**Arabellastrasse 4**
**81925 München (DE)**

(54) **A METHOD AND RECEIVER FOR THE MULTI-PATH DETECTION IN CODE DIVISION MULTIPLE ACCESS SYSTEM**

(57)     A multi-path detection method in code division multiple access system is provided, and the method includes the following step: A. performing an initial multi-path detection on all sampling points within a current searching interval to obtain sampling points of peak detection(300); B. determining whether both of currently read non-zero sampling points and are local peak points (302), if so, carrying out local double-peak detection (304); otherwise, carrying out local single-peak detection (303); C. buffering delay and power information corresponding to the non-zero sampling points obtained after the peak detection(305); D. judging whether the peak detection is over(306), if so, outputting the buffered power information and delay information(308); otherwise, reading the next non-zero sampling points $P_{i+1}$ and $P_{i+4}$ as new $P_i$ and $P_{i+3}$ (307), and returning to step B. A receiver of code division multiple access is also provided at the same time.

Fig. 3

**Description**

[Technical Field]

The present invention relates to multi-path detection technique, and particularly relates to multi-path detection method and receiver in Code Division Multiple Access (CDMA) system.

[Background]

CDMA technique has the benefits of large capacity, support for multiple users, soft capacity and suppression of in-band noise within system, and it has an obvious advantage over the traditional Frequency Division Multiple Access (FDMA) and

Time Division Multiple Access (TDMA) techniques. For this reason, the third generation (3G) mobile communication system based on CDMA technology is becoming strongly promoted dominant commercial wireless mobile communications system today.

In wireless communications systems using Code Division Multiple Access, while propagating in the air, radio signals may be blocked, refracted or scattered by obstacles, the ionosphere, and the like, meanwhile, there will be offset and spread in frequency domain when signals of limited bandwidths traveling in the air. Therefore, the signals received by a receiver are not direct single path signals, but multiple paths signals which come from different directions via different paths. Original data transmitted by multiple paths signals are identical but with different time delays. They are a superposition of the replicas, which are independent of each other, of transmitted signals. Typically, such same data source signals from different paths are referred to as multi-path signals.

In a direct sequence Code Division Multiple Access (DS-CDMA) system, since data symbols are spread by a long pseudo-random (PN) sequence, each chip has a very short duration. In this way, signals transmitted to the receiver via different paths can be separated effectively on chips. Therefore, if signals of respective paths can be correctly tracked on chip-level, and thereafter signals of each path are processed and combined respectively by a RAKE receiver with a plurality of receiving fingers, and the interference caused by multi-path aliasing can be converted to the diversity gain of multi-path after RAKE combination. Herein, the operation of tracking signals of respective paths is referred to as multi-path searching. It can be seen that in order to reduce the interference caused by multi-path aliasing, the primary function of multi-path searching is to detect correctly and exhaustively the most significant multi-path component, with a precision of at least 1/2 chip.

Usually, according to the multi-path delay, multi-path separated by 1~2 chips is called short-delay multi-path, while multi-path separated by more than 2 chips is called long-delay multi-path. At present, primary multi-path is within 3 microseconds in urban area, less than 0.5 microseconds in rural area, and less than 0.2 microseconds in constructions. In the multi-path fading channel environments given by 3GPP, there even may be a case in which four consecutive paths are separated by only one chip. Apparently, for the 3GPP standards, short-delay multi-path may occur a lot in practice.

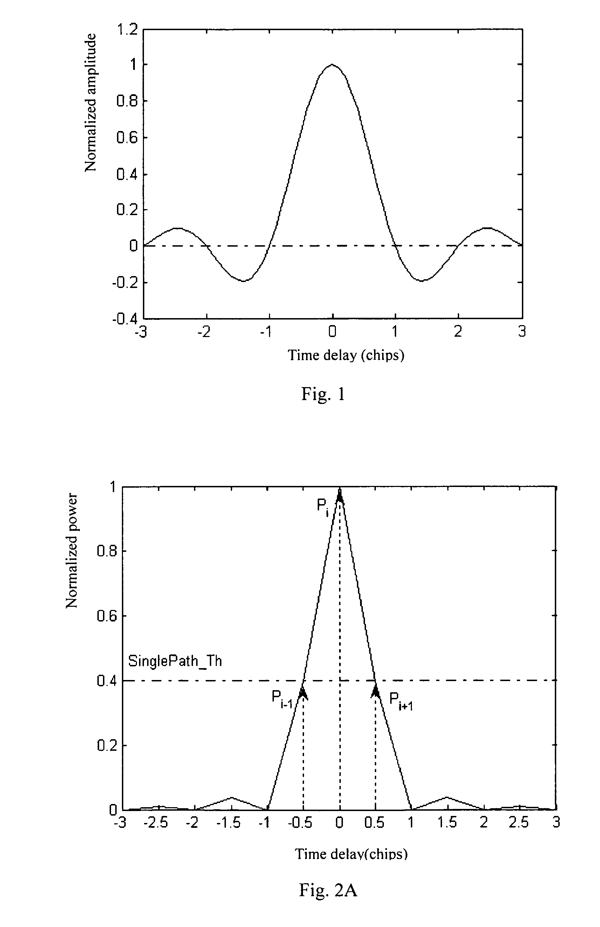

For short-delay multi-path, there will be serious crosstalk in practice since signals have side lobes in time domain. In particular, since a radio signal has a limited bandwidth, and the radio signal must be filtered by a chip formation filter before transmission to constraint its bandwidth within a range set by design. At the same time, FFT dictates that a signal of limited bandwidth cannot be infinitely narrow in time domain. Fig. 1 illustrates the pulse response of a Raised-Cosine filter of which the roll-off factor is 0.22. From Fig. 1, the side lobes of the pulse response only have visible residual effect on signals adjacent before and after by 2 chips, but have significant effect on signals adjacent by 1 chip, which is comparable to the signals themselves. Apparently, the peak of multi-path is sure to be affected by the crosstalk of short-delay multi-path in practice.

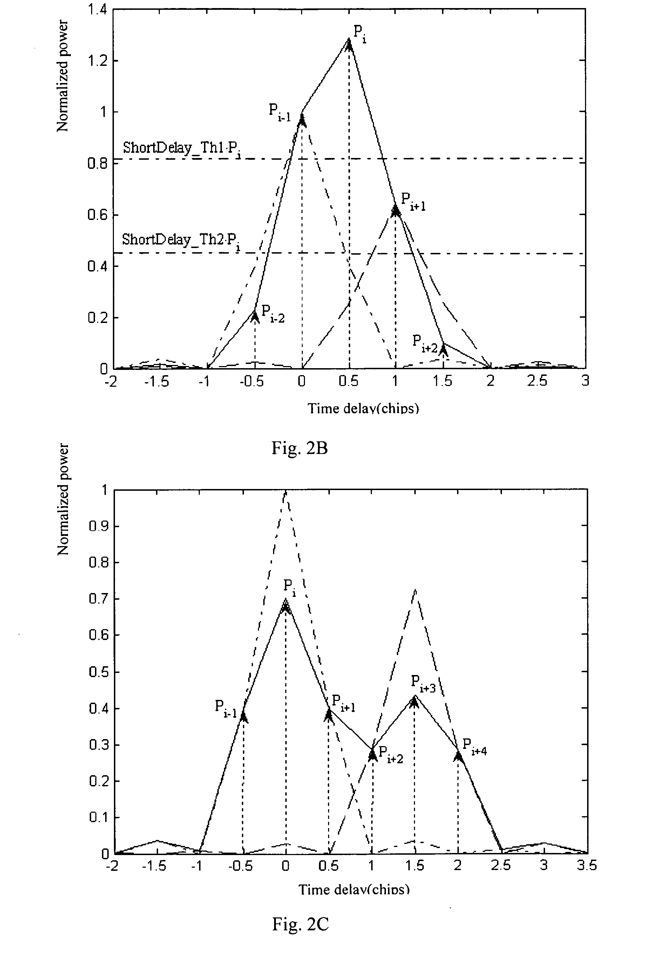

Fig 2A schematically shows the pulse of single path power response. Figs 2B to 2D schematically show the interference superposition of double paths spaced by 1, 1.5 and 2 chips in time, respectively. The horizontal axis is time delay in unit of chips and the vertical axis is normalized power in Figs 2A to 2D. In Fig. 2A, the solid curve is single pulse response, $P_i$ is the peak currently detected, and $P_{i-1}$ and $P_{i+1}$ are side lobes that are adjacent to peak $P_i$ from both sides, respectively. Fig 2B is the interference superposition of double-path signals spaced by 1 chip, in which, the solid curve represents the power response $P_y(t)$ of a received signal, the dash dotted curve represents the true power response $P_1(t)$ of the signal, and the dashed curve represents another true power response $P_2(t)$ of the signal. As shown by Fig. 2B, when two paths are separated by 1 chip, the power response $P_y(t)$ of the received signal has differed significantly from the true responses $P_1(t)$ and $P_2(t)$ of the signal. The peak of $P_y(t)$ formed by superposition of $P_1(t)$ and $P_2(t)$ is higher than either peak of the true multi-path responses $P_1(t)$ and $P_2(t)$. In prior art, a local maximum peak sampling point is detected. Therefore, if a detection according to the prior art is performed, then $P_y(t)$ will be kept but $P_1(t)$ and

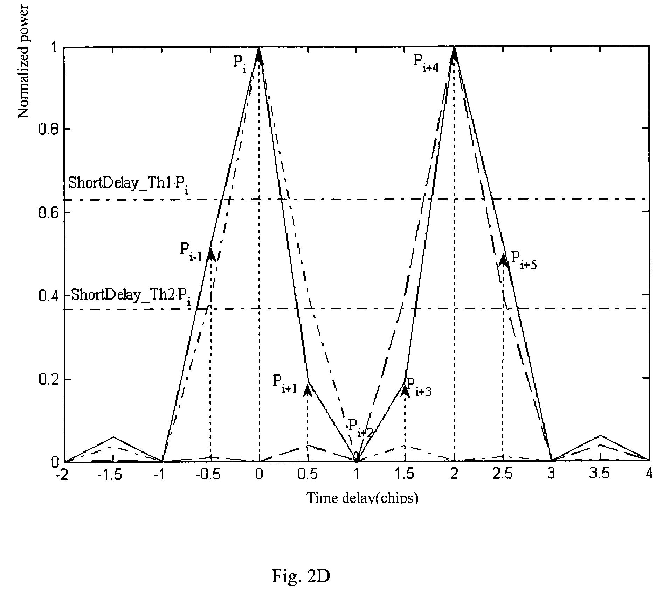

$P_2(t)$ will be removed, which leads to a false detection and a missing detection, here, the deviation of false multi-path detection is 1/2 chip. The false detection is also called a false alarm, while the missing detection is called a dismissal alarm. Similar problems also occur in the condition of an interval of 1.5 or 2 chips in Figs 2C, 2D, and detailed description will be omitted.

Of course, for the problems occurring in Figs 2B to 2D, the multi-path deviated can be corrected by the step of multi-path tracking, e.g., often by use of a delay-locked loop (DLL), however, this will increase the burden of multi-path tracking and there is no guarantee for complete correction. The reason is that it takes a long time for conventional multi-path tracking approach to converge, and, if multi-path are close to each other, the crosstalk between multi-path often make tracking positions fail to converge correctly. As shown by Fig. 2B, if peaks of $P_1(t)$ and $P_2(t)$ are removed and the peak of $P_y(t)$ is kept, even in case of a perfect multi-path tracking, only one path of $P_1(t)$ and $P_2(t)$ can be locked to , and the other is to be lost for sure. Therefore the system performance will be degraded much if a prior art detection is used.

According to the above analysis, in case of short-delay, there will be inevitable deformation between multi-path due to side lobes crosstalk. Since the prior art is not able to detect and differentiate true and false local peaks, a lot of detection error may happen in short-delay condition, resulting in a sharp increase in probabilities of a false alarm and a dismissal alarm.

[Summary of the Invention]

An object of the invention is to provide a multi-path detection method in Code Division Multiple Access system that can effectively reduce the probabilities of a false alarm and a dismissal alarm in a short-delay condition while alleviating the burden of multi-path tracking.

Another object of the invention is to provide a CDMA receiver that can reduce the probabilities of false alarm and dismissal alarm simultaneously.

To achieve the above objects, the technical solution of the invention is as follows:

The invention provides a multi-path detection method in a Code Division Multiple Access system, the method comprises:

A. performing an initial multi-path detection on all sampling points within a current searching interval to obtain sampling points of peak detection;
B. determining whether both of currently read non-zero sampling points $P_i$ and $P_{i+3}$ are local peak points, if so, carrying out local double-peak detection; otherwise, carrying out local single-peak detection;
C. buffering delay information corresponding to the non-zero sampling points $P_i$ obtained after the peak detection;
D. judging whether the peak detection is over, if so, outputting the buffered power information and delay information; otherwise, reading the next non-zero sampling points as new $P_i$ and $P_{i+3}$, and returning to step B.

Between steps A and B, the method further comprises arranging the sampling points obtained in step A in a precedence order of the delay information, and reading the non-zero sampling points $P_i$ and $P_{i+3}$ sequentially, wherein the initial value of $i$ is 1.

In the above technical solution, the initial multi-path detection further comprises:

A1. finding the Lth maximum power $P_L$ in the powers of all of the sampling points within the current searching interval; accumulating sampling point powers lower than $P_L$, and calculating an average S of the accumulation result;
A2. calculating an initial detection threshold, setting all of the sampling point powers lower than the initial detection threshold to zero, then taking power sampling points that are set to zero and power sampling points that are not set to zero as sampling points of the peak detection.

The initial detection threshold is a product of the average S and a parameter $\lambda$, wherein $\lambda$ is a real number in [1,100].

In the above technical solution, step A1 comprises the following specific steps of:

A11. arranging the powers of individual sampling points within the searching interval in a precedence order of delay, initializing values of loop variables S and M to zero, and finding the Lth maximum power $P_L$ in the powers of all of the sampling point;
A12. comparing $P_M$ to $P_L$, if $P_M < P_L$, then adding $P_M$ to S, and proceeding to step A13, otherwise, proceeding to step A14;
A13. judging whether all of the sampling points have been read, if so, proceeding to step A15; otherwise proceeding to step A14;
A14. increasing M by 1 and returning to step A12;
A15. calculating and outputting the average of S.

In the above technical solution, determining whether both of currently read non-zero sampling points $P_i$ and $P_{i+3}$ are local peaks in step B comprises the specific steps of:

B11. judging whether $P_i > 0$ , $P_i > P_{i-1}$ and $P_i > P_{i+1}$ are all tenable, if not, then $P_i$ is not a local peak, and ending the current judging process; if so, proceeding to step B12;

B12. judging whether $P_{i+3} > 0$ , $P_{i+3} > P_{i+2}$ and $P_{i+3} > P_{i+4}$ are all tenable, if so, both $P_i$ and $P_{i+3}$ are local peaks; if not, $P_{i+3}$ is not a local peak.

Accordingly, the local double-peak detection in Step B comprising specific step of setting the powers of sampling points immediately before and after $P_i$ or $P_{i+3}$ to zero; the local single-peak detection in step B comprises the specific steps of:

B21. judging whether $P_{i-1} < SinglePath\_Th \cdot P_i$ and $P_{i+1} < SinglePath\_Th \cdot P_i$ are both tenable, if so, then proceeding to step B23, if not, then proceeding to step B22; wherein $SinglePath\_Th$ is a single path threshold;

B22. judging whether $MAX(P_{i-1}, P_{i+1}) > ShortDelay\_Th1 \cdot P_i$ and $MIN(P_{i-1}, P_{i+1}) > ShortDelay\_Th2 \cdot P_i$ are both tenable, if so, then proceeding to step B24, if not, then proceeding to step B23; wherein $ShoYtDelay\_Th1$ and $ShortDelay\_Th2$ are short-delay threshold 1 and short-delay threshold 2, respectively;

B23. setting $P_{i-1}$ and $P_{i+1}$ to zero, respectively, and then proceeding to step B25;

B24. setting the false peak $P_i$ and side paths $P_{i-2}$, $P_{i+2}$ of two true multi-path peaks to zero, and then proceeding to step B25;

B25. outputting powers after the detection.

The single path threshold $SinglePath\_Th$ is $P(T_c / 2) + \delta$, wherein $\delta$ is a noise margin, and $\delta \in (0,0.03)$ ; the short-delay threshold 1 $ShortDelay\_Th1 >$ is $\dfrac{1}{(2\gamma)^2} + \delta_1$ , the short-delay threshold 2 $ShortDelay\_Th2$ is $(\dfrac{1}{\gamma} - 1)^2 + \delta_2$, and $\delta_1$ and $\delta_2$ are noise margins, $\delta_1 \in (0,0.2)$, $\delta_2 \in (0,0.08)$.

In the above technical solutions, between steps B and C, the method further comprises the specific steps of:

B31. reading the delay power $P_i$ stored after the local peak detection, wherein the initial value of $i$ is 0;

B32. determining if $P_i > 0$ and $P_{i+1} > 0$ are both tenable, if so, then judging whether $P_i > P_{i+1}$ is tenable, if so, setting $P_{i+1}$ to zero, otherwise setting $P_i$ to zero; if not, then proceeding to step B33;

B33. determining if the adjacent sampling values detection is over, if so, then proceeding to step C; if not, increasing i by 1, and returning to step B31.

The invention also provides a Code Division Multiple Access receiver comprising a RF front end, an N-times over-sampler and a RAKE receiving processor. The receiver further includes:

a receiving filter for carrying out matched-filtering on signals oversampled by the N-times over-sampler and sending the matched-filtered signals to a multi-path searcher, a multi-path tracker and the RAKE receiving processor, respectively;

the multi-path searcher for coarsely searching for delay positions of individual multi-path signals, and sending the searched multi-path delay positions to a multi-path manager;

the multi-path manager for managing, coordinating and allocating the multi-path delay information searched, and providing the multi-path delay positions to the multi-path tracker;

the multi-path tracker for tracking the multi-path delay positions provided by the multi-path manager and performing refined synchronization, providing the precise multi-path position information to the RAKE receiving processor and simultaneously feeding them back to the multi-path manager.

The multi-path searcher further includes:

a 2-times baseband rate extractor for carrying out 2-times baseband rate extracting on the N-times sampled data;
a correlator for calculating correlation values of sampling points;
a delay power spectrum generator for calculating power spectrum of the correlation values of the sampling points;

an initial detector for carrying out an initial detection on the power spectrum of the sampling points;
a peak detector for carrying out a peak detection on the power spectrum of the sampling points;
wherein, data processed by a receiving filter are extracted by the 2-times baseband rate extractor to obtain 2-times oversampled data information, the obtained data and a local pseudo-random code are used to calculate the correlation values of individual sampling points in the correlator, and the respective correlation values are passed through the delay power spectrum generator, the initial detector and the peak detector in turn for correlation power detection.

In the above technical solution, the peak detector further includes:

a power sequencing unit for arranging sampling point power $P_i$ obtained after the initial detection in a precedence order of delay, and sequentially sending the sequenced sampling point power to a local peak decision unit;
the local peak decision unit for determining whether $P_i$ and $P_{i+3}$ are local peaks, and triggering a local peak detection unit to carry out local peak detection when at least $P_i$ is determined to be a local peak;
the local peak detection unit for carrying out local single-peak detection or local double-peak detection, and triggering an adjacent sampling values detection unit after finishing the peak detections;
a loop variable processing unit for initializing a loop variable or controlling the increment thereof;
the adjacent sampling values detection unit for setting powers of sampling points with lower power among all of the adjacent peaks above zero to zero, and controlling to accomplish all adjacent sampling values detections; and
a delay information processing unit for buffering and outputting power information $P_i$ of peaks above zero in all of the peaks after the adjacent sampling values
detections and corresponding delay information $C_i$.

By setting three different thresholds, the multi-path detection method and receiver in a CDMA system proposed in this invention can not only differentiate between long-delay path and a short-delay path effectively, but also make a proper judgement on the authenticity of local peaks effectively in short-delay condition, thus eliminating the problems in the prior art that the long-delay path and the short-delay path cannot be differentiated effectively and a false peak created by superposition of two multi-path is higher than true peaks of the two multi-path in short-delay condition. The invention can reduce the probabilities of false alarm and dismissal alarm at the same time, and it is easy to be implemented, thus alleviating the burden of multi-path tracking effectively.

[Brief Description of the Drawings]

Fig. 1 is a schematic of a pulse response for a Raised-Cosine filter;
Fig.2A is a schematic of pulses of a single-path power response;
Fig.2B is a schematic of interference superposition of double paths spaced by 1chip;
Fig.2C is a schematic of interference superposition of double paths spaced by 1.5 chips;
Fig.2D is a schematic of interference superposition of double paths spaced by 2 chips;
Fig.3 is a flowchart schematically illustrating implementation of the multi-path detection method according to the invention;
Fig.4 is a flowchart schematically illustrating the method of calculating an average in initial detection according to the invention;
Fig.5 is a schematic of the result of initial detection according to the invention;
Fig. 6 is a flowchart for implementing the multi-path peak detection according to the invention;
Fig.7 is a schematic of the process of local single-peak detection according to the invention;
Fig. 8 is a schematic of the structure of a CDMA receiver according to the invention;
Fig. 9 is a schematic of the structure of a multi-path searcher according to the invention.

[Preferred Embodiments]

The core principle of the invention is as follows: Detection is performed on multi-path peaks after initial detection. The multi-path peaks are classified as local double-peak and local single-peak. For the local double-peak case, 2 maximum peaks are reserved; for the local single-peak case, the local single-peak that fulfills both a long-delay single path threshold and two short-delay double-path thresholds is removed, and the multi-path peaks adjacent to this local single-peak by 1/2 chip on both sides are reserved, otherwise, the current local single-peak is reserved.
Herein, the local single-peak is reserved in one of the following two situations: 1) the local single-peak that does not fulfill the long-delay single path threshold is reserved; and, 2) the current local single-peak that fulfills the long-delay single path threshold but fails to fulfills both the two short-delay double-path thresholds is reserved.

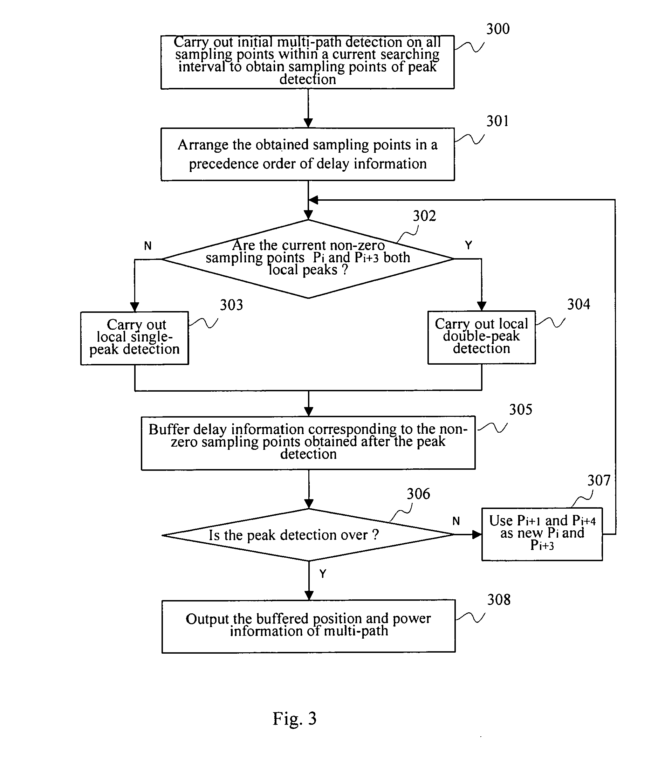

Fig.3 is a flowchart schematically illustrating implementation of the multi-path detection method according to the invention. As shown in Fig. 3, the multi-path detection method according to the invention includes the steps of:

Step 300: Carrying out initial multi-path detection on all sampling points within a current searching interval to obtain sampling points for peak detection;

Step 301: arranging the sampling points obtained after initial multi-path detection in a precedence order of delay information, initializing an loop variable i = 1, then sequentially reading non-zero sampling points $P_i$ and $P_{i+3}$, wherein the delay information is the position of multi-path;

Step 302~304: determining whether the current non-zero sampling points $P_i$ and $P_{i+3}$ are both local peak values, if no, carrying out local single-peak detection, if so, carrying out local double-peak detection, wherein said 'no' corresponds to the case in which $P_i$ is a local peak but $P_{i+3}$ is not a local peak, since data is read in the size order of address after being stored in memories.

Step 305: buffering the delay information corresponding to the non-zero sampling points obtained by single path or double-path peak detections;

Step 306~308: judging whether the peak detection is over. If so, outputting the buffered multi-path power information and delay information, i.e. the position value, for subsequent processing, otherwise, reading the next non-zero sampling points $P_{i+1}$ and $P_{i+4}$ adjacent to $P_i$ and $P_{i+3}$ sequentially, setting the read non-zero sampling points $P_{i+1}$ and $P_{i+4}$ as new $P_i$ and $P_{i+3}$, and returning to step 302.

In the flow shown in Fig. 3, the sequencing in step 301 is for the sake of operation convenience as well as avoiding missing any data to be processed, therefore it is omissible in practice, as long as all of the non-zero sampling points will be processed. Accordingly, without sequencing, $P_{i+1}$ and $P_{i+4}$ is not necessarily the next non-zero sampling points adjacent to $P_i$ and $P_{i+3}$, as long as they are un-processed non zero sampling points.

As shown by the flow in Fig. 3, an initial multi-path detection is carried out firstly, then peak detections in this invention, wherein the initial multi-path detection includes the steps of:

Step 401: finding the Lth maximum power $P_L$ in the powers of all of the sampling points within the current searching interval; accumulating the sampling point powers lower than $P_L$, and calculating an average S of the accumulation result.

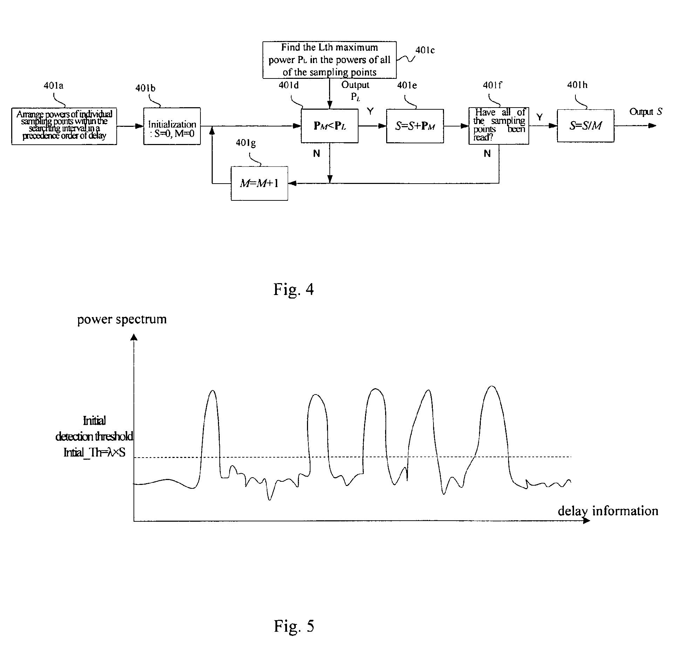

The detailed operations of calculation of the average of sampling points in step 401 are illustrated in Fig. 4, which include:

Step 401a: arranging powers of individual sampling point within the searching interval in a precedence order of delay;

Step 401b: setting initial values of loop variables, S=0, M=0;

Step 401c: finding the Lth maximum power $P_L$ in the powers of all of the sampling points, wherein the value of L is decided by the oversampling times employed and the number of fingers of the RAKE receiver. In this invention the value of L is equal to the number of fingers of the receiver, and usually it is no more than 8.

Step 401d~401e: comparing the currently read sampling power $P_M$ to $P_L$, if $P_M < P_L$, then adding $P_M$ to S, i.e., S=S+$P_M$, and proceeding to step 401 f; otherwise, proceeding to step 401g, reading the next $P_M$ until all of the powers of sampling points have been read.

Step 401f: judging whether all of the sampling points have been read, if so, proceeding to step 401h, otherwise, proceeding to step 401g.

Step 401g: accumulating the loop variable M, i.e., M=M+1, and returning to step 401 d.

Step 401h: calculating and outputting the average of sampling power.

In the above steps, there is no precedence order for carrying out steps 401a~401c, and they can be carried out simultaneously.

Step 402: calculating the initial detection threshold Imtial_Th=λ*S, wherein λ is a real number in [1,100]. Fig.5 shows the resultant curves after initial detection, i.e., multiplying the average S with parameter λ to calculate the initial threshold Initial_Th.

Step 403: setting all of the powers of sampling points lower than the initial detection threshold to zero, reserving powers of sampling points higher than Initial_Th, then taking the power sampling points that are set to zero and power sampling points that are not set to zero as the sampling points for peak detection.

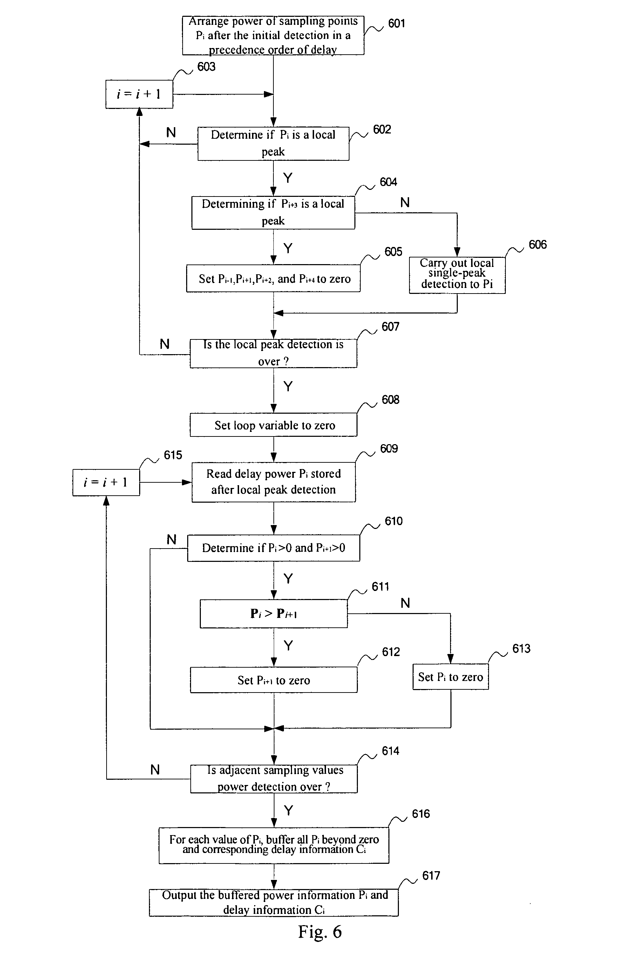

The detailed process of Peak detection is shown in Fig. 6, including the steps of:

6

Step 601: arranging powers of sampling points $P_i$ in a precedence order of delay, and initializing the loop variable i = 1.

Steps 602~603: determining if $P_i$ is a local peak, .i.e., judging whether $P_i > 0$ , $P_i > P_{i-1}$ and $P_i > P_{i+1}$ are all tenable. If not so, then, increasing the loop variable by 1, then returning to step 602 and determining if next $P_{i+1}$ is a local peak; if so, then proceeding to step 604.

Steps 604~606: determining if $P_{i+3}$ is a local peak, .i.e., judging whether $P_{i+3} > 0$ $P_{i+3} > P_{i+2}$ and $P_{i+3} > P_{i+4}$ are all tenable. If so, both $P_i$ and $P_{i+3}$ are local peaks, as illustrated in Fig. 2C, setting $P_{i-1}$, $P_{i+1}$, $P_{i+2}$, $P_{i+4}$ to zero; if not, carrying out local single-peak detection to $P_i$.

Steps 607~609:Judging whether the local peak detection is over, if so, setting the loop variable to zero, and reading the delay power $P_i$ stored after local peak detection; if not, then returning to step 603. Herein, the judgement refers to judging whether all of the powers of sampling points have been read in local peak detection, i.e., judging whether the loop variable i has pointed to the end of the memory.

Steps 610~613: determining if $P_i > 0$ and $P_{i+1} > 0$ are both tenable, if so, then judging whether $P_i > P_{i+1}$ is tenable, if so, setting $P_{i+1}$ to zero, otherwise setting $P_i$ to zero; if not, then proceeding to step 614.

Steps 614~615: determining if the adjacent sampling values detection is over, if so, then proceeding to step 616; if not, increasing i by 1, and returning to step 609.

Steps 616~617: calculating delay information $C_i$ corresponding to all of the peak power information $P_i$ beyond zero, buffering $P_i$ and $C_i$, outputting the buffered power information $P_i$ and delay information $C_i$ for subsequent processing, such as management, coordination and allocation of the multi-path information, and on the like.

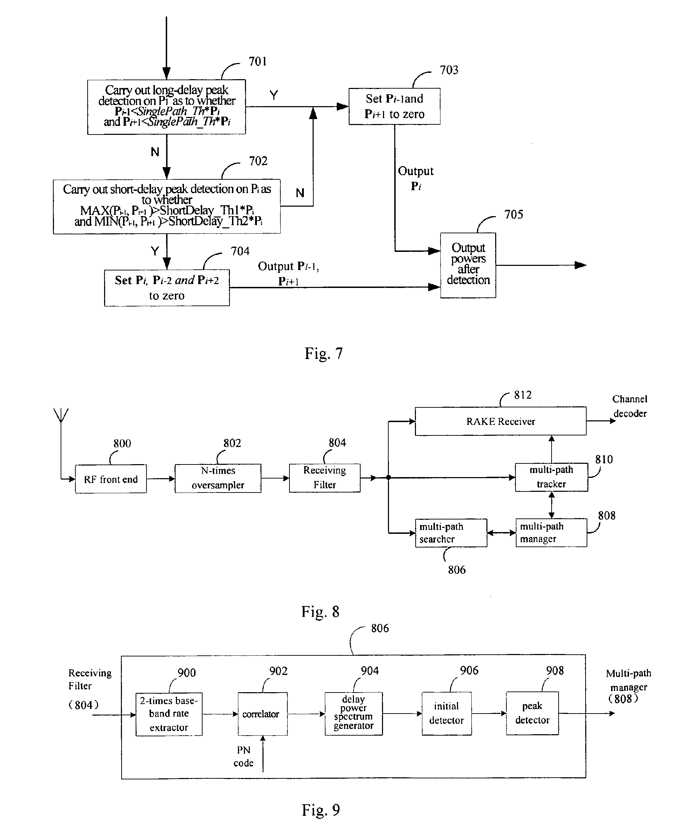

The detailed detection process of the local single-peak detection mentioned in step 606 is illustrated in Fig. 7, including the steps of:

Step 701: determining if $P_i$ is a peak created by a long-delay single path. As shown in Fig. 2A, the delay between two paths is more than 2 chips, $P_i$ can be considered as a single path peak. In this situation, only judging whether $P_{i-1} < SinglePath\_Th \cdot P_i$ and $P_{i+1} < SinglePath\_Th \cdot P_i$ are both tenable, if so, which indicates that it is a long-delay single path peak as shown in Fig. 2A, then proceeding to step 703; if not, which indicates that there exists short-delay double-path superposition, then $P_i$ is a false peak due to the superposition of adjacent double paths as shown in Fig. 2B, and proceeding to step 702.

In step 701, $SinglePath\_Th$ is the single-path threshold, the value of $SinglePath\_Th$ can be calculated by use of the following method:

It is assumed that the unit pulse response of the filter is $h(t)$, the power spectrum of the response is $P(t) = h^2(t)$, as shown in Fig. 2A. Then the single path threshold is $SinglePath\_Th = P(T_c / 2) + \delta$, wherein $\delta$ is a selected noise margin value corresponding, to the lowest operational signal to noise ratio (SNR) specified by system design and the length related to calculation, and it can be determined by system simulation, typically $\delta \in (0, 0.03)$. For a raised-cosine filter with a roll-off coefficien $\alpha = 0.22$ , $P(T_c / 2) = 0.3962$. Accordingly, $SinglePath\_Th \in (0.3962, 0.4262)$.

Step 702: carrying out short-delay peak detection with respect to $P_i$, i.e., judging whether $MAX(P_{i-1}, P_{i+1}) > ShortDelay\_Th1 \cdot P_i$ and $MIN(P_{i-1}, P_{i+1}) > ShortDelay\_Th2 \cdot P_i$ are both tenable, if so, then proceeding to step 704; if not, which indicates that the current peak $P_i$ is affected by superposition of adjacent multi-path, but the superposition result does not exceed the peaks of the two true paths, as shown in Fig. 2D, and the detected peak at this point is the true peak of multi-path, therefore, proceeding to step 703.

In step 702, $ShortDelay\_Th1$ and $ShortDelay\_Th2$ are thresholds of two short-delay single paths, respectively. The values of short-delay threshold 1 and short-delay threshold2, i.e., $ShortDelay\_Th1$ and $ShortDelay\_Th2$ can be calculated by use of the following method:

It is assumed that the unit pulse response of the two short-delay single paths are $h_1(t) = h(t)$, $h_2(t) = \beta \cdot h(t - T_c)$, $0 < \beta \le 1$, respectively, then the received pulse response is $h_y(t) = h(t) + \beta \cdot h(t - T_c)$. As shown in Fig. 2B, $P_{i-1}$, $P_{i+1}$ and $P_i$ represent the peak power of the two single paths and the peak power of the true response super positioned exactly in middle of the two single paths, respectively. Then $P_i = [h(T_c/2) + \beta \cdot h(-T_c/2)]^2$, $P_{i-1} = h^2(0)$ , and $P_{i+1} = \beta^2 \cdot h^2(0)$. The condition that the result of superposition exceeds the two true multi-path peaks is given by:

$$\begin{cases} P_i > P_{i-1} \\ P_i > P_{i+1} \end{cases} => \begin{cases} (\gamma + \beta \cdot \gamma)^2 > 1 \\ (\gamma + \beta \cdot \gamma)^2 > \beta^2 \end{cases}, (\gamma = \frac{h(T_c / 2)}{h(0)}, 0 < \beta \le 1)$$

Solve this one-variable quadratic inequality set, $1/_{\gamma} - 1 < \beta \le 1$ is obtained , and further :

$$\begin{cases} \dfrac{MAX(P_{i-1},P_{i+1})}{P_i} = \dfrac{1}{(\gamma+\beta\cdot\gamma)^2} \in [\dfrac{1}{(2\gamma)^2},1) \\[3mm] \dfrac{MIN(P_{i-1},P_{i+1})}{P_i} = \dfrac{\beta^2}{(\gamma+\beta\cdot\gamma)^2} \in ((\dfrac{1}{\gamma}-1)^2,\dfrac{1}{(2\gamma)^2}] \end{cases}$$

Setting the short-delay threshold 1 and the short-delay threshold 2 as

$$ShortDelay\_Th1 = \frac{1}{(2\gamma)^2} + \delta_1 \quad \text{and} \quad ShortDelay\_Th2 = (\frac{1}{\gamma}-1)^2 + \delta_2,$$

respectively, $\delta_1$ and $\delta_2$ are selected noise margins values corresponding to the lowest operational SNR specified by system design and the length related to calculation, and it can be determined by system simulation, typically $\delta_1 \in (0,0.2)$, $\delta_2 \in (0,0.08)$. For a raised-cosine filter with a roll-off coefficient $\alpha = 0.22$, $\gamma = 0.6294$. Correspondingly, the two short-delay single path thresholds are $ShortDelay\_Th1 \in (0.632,0.832)$, $ShortDelay\_Th2 \in (0.347,0.427)$.

Step 703: Setting $P_{i-1}$ and $P_{i+1}$ to zero, respectively, and then proceeding to step 705.

Step 704: Setting the false peak $P_i$ and the side paths $P_{i-2}$, $P_{i+2}$ of the two true multi-path peaks to zero, and then proceeding to step 705.

Step 705: Outputting powers after detection.

In order to implement the multi-path detection method according to the invention, a structure of CDMA receiver is proposed in the invention. As shown in Fig. 8, the CDMA receiver of the invention comprises a RF front end 800, a N-times oversampler 802, a receiving filter 804, a multi-path searcher 806, a multi-path tracker 810, a multi-path manager 808 and a RAKE receiving processor 812. The RF front end 800 is used to achieve the processing of RF reception, i.e., to achieve the conversion of data from electromagnetic signals to baseband signals and the transmission of the processed signals through the N-times oversampler 802 to the receiving filter 804. The N-times oversampler 802 is used to N-times oversample the baseband signals, wherein N is no less than 2. The receiving filter 804 is used to carry out matched filtering on signals oversampled by the N-times oversampler 802. If a root raised cosine (RRC) filter is employed at the transmitting terminal, then a RRC filter will also be used to receive at the receiving terminal, and the filtered signals are equivalent to transmitted signals being filtered by a raised-cosine filter. The multi-path searcher 806 is used to coarsely search for delay positions of individual multi-path signals, and send the searched multi-path delay position to the multi-path manager, typically with a precision no less than 1/2 chip. The multi-path manager 808 is used to manage, coordinate and allocate the searched multi-path delay information, and to provide the multi-path delay position to the multi-path tracker 810. The multi-path tracker 810 is used to track the multi-path delay positions provided by the multi-path manager 808, perform refined synchronization, provide the tracked precise multi-path delay information of individual multi-path to RAKE receiving processor 812 and feed them back to the multi-path manager 808, typically with a precision no less than 1/8 chip. The RAKE receiving processor 812 is used to demodulate and combine the data.

The signals oversampled by the N-times oversampler 802 are divided into 3 branches after being matched filtered by the receiving filter 804: one branch is processed by multi-path searcher 806 and multi-path manager 808 to obtain coarse multi-path position information; another branch is processed by the multi-path tracker 810 under the control of multi-path manager 808 to obtain the precise values of the delay information of individual paths, wherein the identical branch of baseband data are fed as input to both multi-path searcher 806 and the multi-path tracker 810; the last branch sends the data processed by receiving filter 804 to the RAKE receiving processor 812 where the demodulation of baseband data is achieved under the control of the delay information output by the multi-path tracker 810. Data demodulated by the RAKE receiving processor 812 are sent to the channel decoder for decoding to recover the transmitted data.

In the CDMA receiver proposed in the invention, the multi-path searcher 806 has a specific structure that is different from the prior art. Fig. 9 is a schematic of the multi-path searcher structure. As shown in Fig. 9, the multi-path searcher of the invention comprises a 2-times baseband rate extractor 900, a correlator 902, a delay power spectrum generator 904, an initial detector 906 and a peak detector 908. The 2-times baseband rate extractor 900 is used to carry out 2-times baseband rate extracting on the N-times sampled data, which can reduce the number of sampling points to be processed by several folds, and as a result, the consumption of the system is also decreased. The correlator 902 and the delay power spectrum generator 904 are used to calculate the correlation values of the sampling points and the power spectrum of the correlation values, respectively; the initial detector 906 and the peak detector 908 are used to carry out initial detection and peak detection on the power spectrum of the sampling points, respectively.

The data processed by the receiving filter 804 are extracted by the 2-times baseband rate extractor 900 and then 2-times oversampled data information is obtained. The obtained data and the local PN code are used to calculate the correlation values of individual sampling points in the correlator 902. The respective correlation values are passed through the delay power spectrum generator 904, the initial detector 906 and peak detector 908 in turn for correlation power detection. Fig. 6 shows the process of peak detection carried out by the peak detector 908.

In terms of logic functions, the peak detector 908 includes a power sequencing unit, a local peak, a decision unit, a local peak detection unit, a loop variable processing unit, an adjacent sampling values detection unit, and a delay information processing unit. The power sequencing unit is used to arrange the sampling point power $P_i$ obtained after the initial detection in a precedence order of delay, and send the sequenced sampling point power to the local peak decision unit sequentially. The local peak decision unit is used to determine whether $P_i$ and $P_{i+3}$ are local peaks, and trigger the local peak detection unit to carry out local peak detection when at least $P_i$ is determined to be a local peak. The local peak detection unit is used to carry out local single-peak detection or local double-peak detection, and trigger the adjacent sampling values detection unit after finishing the peak detections. The loop variable processing unit is used to initialize a loop variable or control the increment thereof. The adjacent sampling values detection unit is used to determine whether all adjacent local peaks are above zero, set the power of sampling points with lower power among all of the adjacent peaks above zero to zero, and control to carry out the detection of all of the adjacent sampling values. The delay information processing unit is used to buffer and output the power information $P_i$ of peaks above zero in all of the peaks after the adjacent sampling values detection and corresponding delay information $C_i$.

What has been described is only the preferred embodiments of the invention, and should not be construed as limiting the scope of the invention.

**Claims**

1. A multi-path detection method in Code Division Multiple Access system, **characterized in that** the method comprising steps of:

   A. performing an initial multi-path detection on all sampling points within a current searching interval to obtain sampling points of peak detection;
   B. determining whether both of currently read non-zero sampling points $P_i$ and $P_{i+3}$ are local peak points, if so, carrying out local double-peak detection; otherwise, carrying out local single-peak detection;
   C. buffering delay information corresponding to the non-zero sampling points $P_i$ obtained after the peak detection;
   D. judging whether the peak detection is over, if so, outputting the buffered power information and delay information; otherwise, reading the next non-zero sampling points as new $P_i$ and $P_{i+3}$, and returning to step B.

2. The multi-path detection method as in claim 1, **characterized in that** between steps A and B, the method further comprising steps of arranging the sampling points obtained in step A in a precedence order of the delay information, and reading the non-zero sampling points $P_i$ and $P_{i+3}$ sequentially, wherein the initial value of $i$ is 1.

3. The multi-path detection method as in claim 1 or 2, **characterized in that** the initial multi-path detection further comprising steps of:

   A1. finding the Lth maximum power $P_L$ in the powers of all of the sampling points within the current searching interval; accumulating sampling point powers lower than $P_L$, and calculating an average S of the accumulation result;
   A2. calculating an initial detection threshold, setting all of the sampling point powers lower than the initial detection threshold to zero, then taking the power sampling points that are set to zero and power sampling points that are not set to zero as sampling points of the peak detection.

4. The multi-path detection method as in claim 3, **characterized in that** the initial detection threshold is a product of the average S and a parameter $\lambda$, wherein $\lambda$ is a real number in [1,100].

5. The multi-path detection method as in claim 3, **characterized in that** step A1 comprising specific steps of:

   A11. arranging the powers of individual sampling points within the searching interval in a precedence order of delay, setting S and M to zero, and finding the Lth maximum power $P_L$ in the powers of all of the sampling point;
   A12. comparing $P_M$ to $P_L$, if $P_M < P_L$, then adding $P_M$ to S, and proceeding to step A13, otherwise, proceeding to step A14;

A13. judging whether all of the sampling points have been read, if so, proceeding to step A15; otherwise proceeding to step A14;

A14. increasing M by 1 and returning to step A12;

A15. calculating and outputting the average of S.

**6.** The multi-path detection method as in claim 5, **characterized in that** the value of L is decided by the oversampling times employed and the number of fingers of a RAKE receiver.

**7.** The multi-path detection method as in claim 2, **characterized in that** the determining whether both of currently read non-zero sampling points $P_i$ and $P_{i+3}$ are local peaks in step B comprising specific steps of:

B11. judging whether $P_i > 0$ , $P_i > P_{i-1}$ and $P_i > P_{i+1}$ are all tenable, if not, then $P_i$ is not a local peak, and ending the current judging process; if so, proceeding to step B12;

B12. judging whether $P_{i+3} > 0$ , $P_{i+3} > P_{i+2}$ and $P_{i+3} > P_{i+4}$ are all tenable, if so, both $P_i$ and $P_{i+3}$ are local peaks; if not, $P_{i+3}$ is not a local peak.

**8.** The multi-path detection method as in claim 7, **characterized in that** the local single-peak detection in step B comprising specific steps of:

B21. judging whether $P_{i-1} < SinglePath\_Th \cdot P_i$ and $P_{i+1} < SinglePath\_Th \cdot P_i$ are both tenable, if so, then proceeding to step B23, if not, then proceeding to step B22; wherein $SinglePath\_Th$ is a single path threshold;

B22. judging whether $MAX(P_{i-1}, P_{i+1}) > ShortDelay\_Th1 \cdot P_i$ and $MIN(P_{i-1}, P_{i+1}) > ShortDelay\_Th2 \cdot P_i$ are both tenable, if so, then proceeding to step B24, if not, then proceeding to step B23; wherein $ShortDelay\_Th1$ and $ShortDelay\_Th2$ are short-delay threshold 1 and short-delay threshold 2, respectively;

B23. setting $P_{i-1}$ and $P_{i+1}$ to zero, respectively, and then proceeding to step B25;

B24. setting the false peak $P_i$ and side paths $P_{i-2}, P_{i+2}$ of two true multi-path peaks to zero, and then proceeding to step B25;

B25. outputting powers after the detection.

**9.** The multi-path detection method as in claim 8, **characterized in that** the single path threshold $SinglePath\_Th$ is $P(T_c / 2) + \delta$, wherein $\delta$ is a noise margin, and $\delta \in (0,0.03)$.

**10.** The multi-path detection method as in claim 8, **characterized in that** said short-delay threshold 1 $ShortDelay\_Th1$ is $\dfrac{1}{(2\gamma)^2} + \delta_1$ , the short-delay threshold 2 $ShortDelay\_Th2$ being $(\dfrac{1}{\gamma} - 1)^2 + \delta_2$, $\delta_1$ and $\delta_2$ are noise margins, and $\delta_1 \in (0,0.2)$, $\delta_2 \in (0,0.08)$.

**11.** The multi-path detection method as in claim 7, **characterized in that** the local double-peak detection in Step B comprising specific step of setting the powers of sampling points immediately before and after $P_i$ or $P_{i+3}$ to zero.

**12.** The multi-path detection method as in any of claims 8 to 11, **characterized in that** between steps B and C the method further comprising specific steps for adjacent sampling values detection of:

B31. reading the delay power $P_i$ stored after the local peak detection, wherein the initial value of i is 0;

B32. determining if $P_i > 0$ and $P_{i+1} > 0$ are both tenable, if so, then judging whether $P_i > P_{i+1}$ is tenable, if so, setting $P_{i+1}$ to zero, otherwise setting $P_i$ to zero; if not, then proceeding to step B33;

B33. determining if the adjacent sampling values detection is over, if so, then proceeding to step C; if not, increasing i by 1, and returning to step B31.

**13.** The multi-path detection method as in claim 12, **characterized in that** the initial multi-path detection further comprising steps of:

A1. finding the Lth maximum power $P_L$ in the powers of all of the sampling points within the current searching interval; accumulating sampling point powers lower than $P_L$, and calculating an average S of the accumulation result;

A2. calculating an initial detection threshold, setting all of the sampling point powers lower than the initial detection threshold to zero, then taking power sampling points that are set to zero and power sampling points that are not set to zero as sampling points for the peak detection.

14. The multi-path detection method as in claim 13, **characterized in that** step A1 comprising specific steps of:

A11. arranging the powers of individual sampling points within the searching interval in a precedence order of delay, setting initial values of loop variables S and M to zero, and finding the Lth maximum power $P_L$ in all of the sampling point powers;
A12. comparing $P_M$ to $P_L$, if $P_M < P_L$, then adding $P_M$ to S, and proceeding to step A13, otherwise, proceeding to step A14;
A13. judging whether all of the sampling points have been read, if so, proceeding to step A15; otherwise proceeding to step A14;
A14. increasing M by 1 and returning to step A12;
A15. calculating and outputting the average of S.

15. An initial multi-path detection method in a Code Division Multiple Access system, **characterized in that** the method comprising steps of:

a. finding the Lth maximum power $P_L$ in the powers of all sampling points within a current searching interval; accumulating sampling point powers lower than $P_L$, and calculating an average S of the accumulation result;
b. calculating an initial detection threshold, setting all of the sampling point powers lower than the initial detection threshold to zero, then taking power sampling points that are set to zero and power sampling points that are not set to zero as sampling points for peak detection.

16. The initial multi-path detection method as in claim 15, **characterized in that** the initial detection threshold is a product of the average S and a parameter $\lambda$, wherein $\lambda$ is a real number in [1,100].

17. The initial multi-path detection method as in claim 15, **characterized in that** step a comprising specific steps of:

a1. arranging the powers of individual sampling points within the searching interval in a precedence order of delay, setting initial values of loop variables S and M to zero, and finding the Lth maximum power $P_L$ in all of the sampling point powers;
a2. comparing $P_M$ to $P_L$, if $P_M < P_L$, then adding $P_M$ to S, and proceeding to step a3, otherwise, proceeding to step a4;
a3. judging whether all of the sampling points have been read, if so, then proceeding to step a5; otherwise proceeding to step a4;
a4. increasing M by 1 and returning to step a2;
a5. calculating and outputting the average of S.

18. The initial multi-path detection method as in claim 17, **characterized in that** the value of L is decided by the oversampling times employed and the number of fingers of a RAKE receiver.

19. A single-peak detection method in a Code Division Multiple Access system, **characterized in that** the method comprising steps of:

X1. judging whether $P_{i-1} < SinglePath\_Th \cdot P_i$ and $P_{i+1} < SinglePath\_Th \cdot P_i$ are both tenable, if so, then proceeding to step X3, if not, then proceeding to X2; wherein *SinglePath_Th* is a single path threshold;
X2.. judging whether $MAX(P_{i-1}, P_{i+1}) > ShortDelay\_Th1 \cdot P_i$ and $MIN(P_{i-1}, P_{i+1}) > ShortDelay\_Th2 \cdot P_i$ is tenable, if so, then proceeding to step X4, if not, then proceeding to step X3; wherein *ShortDelay_Th1* and *ShortDelay_Th2* are short-delay threshold 1 and short-delay threshold 2, respectively;
X3. setting $P_{i-1}$ and $P_{i+1}$ to zero, respectively, and then proceeding to step X5;
X4. setting the false peak $P_i$ and side paths $P_{i-2}$, $P_{i+2}$ of two true multi-path peaks to zero, and then proceeding to step X5;
X5. outputting powers after the detection.

20. The single-peak detection method as in claim 19, **characterized in that** the single path threshold *SinglePath_Th* being $P(T_c / 2) + \delta$, wherein $\delta$ is a noise margin, and $\delta \in (0,0.03)$.

21. The single-peak detection method as in claim 19, **characterized in that** the short-delay threshold 1 *ShortDelay_*

*Th*1 is $\dfrac{1}{(2\gamma)^2} + \delta_1$, the short-delay threshold 2 *ShortDelay_ Th*2 is $(\dfrac{1}{\gamma} - 1)^2 + \delta_2$, $\delta_1$ and $\delta_2$ are noise

margins, and $\delta_1 \in (0,0.2)$, $\delta_2 \in (0,0.08)$.

22. A multi-path searcher, **characterized in that** the searcher comprising:

a 2-times baseband rate extractor for carrying out 2-times baseband rate extracting on the N-times sampled data;
a correlator for calculating correlation values of sampling points;
a delay power spectrum generator for calculating power spectrum of the correlation values of the sampling points;
an initial detector for carrying out an initial detection on the power spectrum of the sampling points;
a peak detector for carrying out a peak detection on the power spectrum of the sampling points;
wherein, data processed by a receiving filter are extracted by the 2-times baseband rate extractor to obtain 2-times oversampled data information, the obtained data and a local pseudo-random code are used to calculate the correlation values of individual sampling points in the correlator, and the respective correlation values are passed through the delay power spectrum generator, the initial detector and the peak detector in turn for correlation power detection.

23. The multi-path searcher as in claim 22, **characterized in that** the peak detector further comprising:

a power sequencing unit for arranging sampling point power $P_i$ obtained after the initial detection in a precedence order of delay, and sequentially feeding the sequenced sampling point power to a local peak decision unit;
the local peak decision unit for determining whether $P_i$ and $P_{i+3}$ are local peaks, and triggering a local peak detection unit to carry out local peak detection when at least $P_i$ is determined to be a local peak;
the local peak detection unit for carrying out local single-peak detection or local double-peak detection, and triggering an adjacent sampling values detection unit after finishing the peak detections;
a loop variable processing unit for initializing a loop variable or controlling the increment thereof;
the adjacent sampling values detection unit for setting powers of sampling points with lower power among all of the adjacent peaks above zero to zero, and controlling to accomplish all adjacent sampling values detections; and
a delay information processing unit for buffering and outputting power information $P_i$ of peaks above zero in all of the peaks after the adjacent sampling values detections and corresponding delay information $C_i$.

24. A Code Division Multiple Access receiver, comprising a RF front end, an N-times oversampler, and a RAKE receiving processor, **characterized in that** the receiver further comprising:

a receiving filter for carrying out matched-filtering on signals oversampled by the N-times oversampler and feeding the matched-filtered signals to a multi-path searcher, a multi-path tracker and the RAKE receiving processor, respectively;
the multi-path searcher for coarsely searching for delay positions of individual multi-path signals, and feeding the searched multi-path delay positions to a multi-path manager;
the multi-path manager for managing, coordinating and allocating the multi-path delay information searched, and providing the multi-path delay positions to the multi-path tracker;
the multi-path tracker for tracking the multi-path delay positions provided by the multi-path manager and performing refined synchronization, providing the precise multi-path position information to the RAKE receiving processor and simultaneously feeding them back to the multi-path manager.

25. The Code Division Multiple Access receiver as in claim 24, **characterized in that** the multi-path searcher further comprising:

a 2-times baseband rate extractor for carrying out 2-times baseband rate extracting on the N-times sampled data;
a correlator for calculating correlation values of sampling points;
a delay power spectrum generator for calculating power spectrum of the correlation values of the sampling points;
an initial detector for carrying out an initial detection on the power spectrum of the sampling points;

a peak detector for carrying out a peak detection on the power spectrum of the sampling points;
wherein, data processed by a receiving filter are extracted by the 2-times baseband rate extractor to obtain 2-times oversampled data information, the obtained data and a local pseudo-random code are used to calculate the correlation values of individual sampling points in the correlator, and the respective correlation values are passed through the delay power spectrum generator, the initial detector and the peak detector in turn for correlation power detection.

26. The Code Division Multiple Access receiver as in claim 25 **characterized in that** the peak detector further comprising:

a power sequencing unit for arranging sampling point power $P_i$ obtained after the initial detection in a precedence order of delay, and sequentially sending the sequenced sampling point power to a local peak decision unit;
the local peak decision unit for determining whether $P_i$ and $P_{i+3}$ are local peaks, and triggering a local peak detection unit to carry out local peak detection when at least $P_i$ is determined to be a local peak;
the local peak detection unit for carrying out local single-peak detection or local double-peak detection, and triggering an adjacent sampling values detection unit after finishing the peak detections;
a loop variable processing unit for initializing a loop variable or controlling the increment thereof;
the adjacent sampling values detection unit for setting powers of sampling points with lower power among all of the adjacent peaks above zero to zero, and controlling to accomplish all adjacent sampling values detections; and
a delay information processing unit for buffering and outputting power information $P_i$ of peaks above zero in all of the peaks after the adjacent sampling values detections and corresponding delay information $C_i$.

Fig. 1

Fig. 2A

Fig. 2B

Fig. 2C

Fig. 2D

Carry out initial multi-path detection on all sampling points within a current searching interval to obtain sampling points of peak detection    300

Arrange the obtained sampling points in a precedence order of delay information    301

302
Are the current non-zero sampling points $P_i$ and $P_{i+3}$ both local peaks ?

N

Y

Carry out local single-peak detection    303

Carry out local double-peak detection    304

Buffer delay information corresponding to the non-zero sampling points obtained after the peak detection    305

306
Is the peak detection over ?

N

Use $P_{i+1}$ and $P_{i+4}$ as new $P_i$ and $P_{i+3}$    307

Y

Output the buffered position and power information of multi-path    308

Fig. 3

401a

Arrange powers of individual sampling points within the searching interval in a precedence order of delay

401b

Initialization : S=0, M=0

401c

Find the Lth maximum power $P_L$ in the powers of all of the sampling points

401d

Output $P_L$

$P_M < P_L$

Y

401e

$S = S + P_M$

401f

Have all of the sampling points been read?

Y

N

401g

$M = M + 1$

N

401h

$S = S/M$

Output $S$

Fig. 4

power spectrum

Initial detection threshold Intial_Th=λ×S

delay information

Fig. 5

Arrange power of sampling points
$P_i$ after the initial detection in a
precedence order of delay — 601

$i = i + 1$ — 603

N ← Determine if $P_i$ is a local
peak — 602

Y

Determining if $P_{i+3}$ is a local
peak — 604

N →

Y

Set $P_{i-1}, P_{i+1}, P_{i+2},$ and $P_{i+4}$ to zero — 605

Carry out local
single-peak
detection to $P_i$ — 606

N ← Is the local peak detection is
over ? — 607

Y

Set loop variable to zero — 608

$i = i + 1$ — 615

Read delay power $P_i$ stored
after local peak detection — 609

N ← Determine if $P_i > 0$ and $P_{i+1} > 0$ — 610

Y

$P_i > P_{i+1}$ — 611

N →

Y

Set $P_{i+1}$ to zero — 612

Set $P_i$ to zero — 613

N ← Is adjacent sampling values
power detection over ? — 614

Y

For each value of $P_i$, buffer all $P_i$ beyond zero
and corresponding delay information $C_i$ — 616

Output the buffered power information $P_i$ and
delay information $C_i$ — 617

Fig. 6

701

Carry out long-delay peak
detection on Pi as to whether
$P_{i-1} < SinglePath\_Th*P_i$
and $P_{i+1} < SinglePath\_Th*P_i$

Y

703

Set $P_{i-1}$ and
$P_{i+1}$ to zero

N

702

Carry out short-delay peak detection on Pi as
to whether
$MAX(P_{i-1}, P_{i+1}) > ShortDelay\_Th1*P_i$
and $MIN(P_{i-1}, P_{i+1}) > ShortDelay\_Th2*P_i$

N

Output
$P_i$

705

Output
powers
after
detection

Y

704

Set $P_i$, $P_{i-2}$ and $P_{i+2}$
to zero

Output $P_{i-1}$,
$P_{i+1}$

Fig. 7

812

RAKE Receiver

Channel
decoder

800

RF front end

802

N-times
oversampler

804

Receiving
Filter

810

multi-path
tracker

808

multi-path
manager

806

multi-path
searcher

Fig. 8

806

Receiving
Filter

(804)

900

2-times base-
band rate
extractor

902

correlator

PN
code

904

delay
power
spectrum
generator

906

initial
detector

908

peak
detector

Multi-path
manager

(808)

Fig. 9

| INTERNATIONAL SEARCH REPORT | International application No. |
|---|---|
| | PCT/CN2007/001421 |

**A. CLASSIFICATION OF SUBJECT MATTER**

H04J13/00(2006.01)i

According to International Patent Classification (IPC) or to both national classification and IPC

**B. FIELDS SEARCHED**

Minimum documentation searched (classification system followed by classification symbols)

IPC: H04J13/-, H04B7/-, H04K1/-

Documentation searched other than minimum documentation to the extent that such documents are included in the fields searched

Electronic data base consulted during the international search (name of data base and, where practicable, search terms used)

CNKI, CNPAT, WPI, EPODOC, PAJ: CDMA, spread w spectrum, multi w path, peak?, detect+/search+, judg+, threshold?

**C. DOCUMENTS CONSIDERED TO BE RELEVANT**

| Category* | Citation of document, with indication, where appropriate, of the relevant passages | Relevant to claim No. |
|---|---|---|
| X | CN1266314A (ZHONGXING COMMUNICATION CO LTD SHENZHEN), 13 Sep. 2000(13.09.2000), see description page 4 line 10- page 6 line 9, figs. 2-5 | 1-2, 7, 11-12 |
| Y | | 3-6, 13-18, 22-23, 25-26 |
| A | | 8-10, 19-21 |
| Y | CN1512681A (KONINK PHILIPS ELECTRONICS NV), 14 Jul. 2004 (14.07.2004), see description page 7 lines 15-17, fig. 3 | 3-6, 13-18 |
| A | | 1-2, 7-12, 19-26 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 Jan. 2008(02.01.2008) | **17 Jan. 2008 (17.01.2008)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer ZHENG Wenxiao Telephone No. (86-10)62411488 |

Form PCT/ISA/210 (second sheet) (April 2007)

EP 2 157 720 A1

## INTERNATIONAL SEARCH REPORT

International application No.

PCT/CN2007/001421

C (Continuation).    DOCUMENTS CONSIDERED TO BE RELEVANT

| Category* | Citation of document, with indication, where appropriate, of the relevant passages | Relevant to claim No. |
|---|---|---|
| X | CN1335694A (ZHONGXING COMMUNICATION CO LTD SHENZHEN) 13 Feb. 2002 (13.02.2002), see description page 5 lines 9-27, figs. 2-3 | 24 |
| Y | | 22-23, 25-26 |
| A | | 1-21 |
| A | US20030103555A1 (KYUNGTAE HAN, IK-SOO EO, HEE-BUM JUNG, ET AL) 05.6 月 2003 (05.06.2003), see the whole document | 1-26 |

Form PCT/ISA/210 (continuation of second sheet ) (April 2007)

22

# INTERNATIONAL SEARCH REPORT

International application No.

PCT/CN2007/001421

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III   Observations where unity of invention is lacking (Continuation of item 3 of first sheet)**

This International Searching Authority found multiple inventions in this international application, as follows:

The technical features in independent claim 1 are: a multi-path detection method, ...partial dual peaks detection, .... partial single peak detection. The technical features in independent claim 15 are: a multi-path initializing detection method, ...calculating the average, ...calculating the initializing threshold value. The technical features in independent claim 19 are: a single peak detection method, judging the single peak true or fake. The technical features in independent claim 22 are: a multi-path searcher, including the 2 times baseband speed extractor. The technical features in independent claim 24 are: a CDMA receiver, including a receiving filter, a multi-path searcher, a multi-path manager, a multi-path tracker. These technical features are not linked. In conclusion, the groups of claims are not linked by common or corresponding technical features and define 5 different inventions not linked by a single general inventive concept.

1. ☐ As all required additional search fees were timely paid by the applicant, this international search report covers all searchable claims.

2. ☒ As all searchable claims could be searched without effort justifying an additional fees, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**
Information on patent family members

| International application No. |
| --- |
| PCT/CN2007/001421 |

| Patent Documents referred in the Report | Publication Date | Patent Family | Publication Date |
| --- | --- | --- | --- |
| CN1266314A | 13.09.2000 | CN1111325C | 11.06.2003 |
| CN1512681A | 14.07.2004 | WO2004059865A1 | 15.07.2004 |
| | | AU2003288645A1 | 22.07.2004 |
| | | EP1582007A1 | 05.10.2005 |
| | | JP2006512840T | 13.04.2006 |
| | | US2006182168A1 | 17.08.2006 |
| CN1335694A | 13.02.2002 | CN1118974C | 20.08.2003 |
| US20030103555A1 | 05.06.2003 | KR20030044505A | 09.06.2003 |
| | | KR100453811B | 20.10.2004 |
| | | US7194018B2 | 20.03.2007 |

Form PCT/ISA/210 (patent family annex) (April 2007)